(19) Europäisches Patentamt
European Patent Office
Office européen des brevets

(11) Numéro de publication : **0 003 943**
**B1**

(12)

# FASCICULE DE BREVET EUROPÉEN

(45) Date de publication du fascicule du brevet : **24.02.82**

(51) Int. Cl.³ : **H 04 L 7/10**

(21) Numéro de dépôt : **79430002.0**

(22) Date de dépôt : **04.01.79**

(54) **Procédé et dispositif pour déterminer la phase initiale de l'horloge dans un récepteur de données synchrone.**

(30) Priorité : **28.02.78 FR 7806562**

(43) Date de publication de la demande : **05.09.79 (Bulletin 79/18)**

(45) Mention de la délivrance du brevet : **24.02.82 Bulletin 82/08**

(84) Etats contractants désignés : **DE FR GB**

(56) Documents cités : **US - A - 3 758 870**

(73) Titulaire : **International Business Machines Corporation**

**Armonk, N.Y. 10504 (US)**

(72) Inventeur : **Godard, Dominique**
**Villa "Ormeau de Barnarac"**
**F-06650 Le Rouret (FR)**

(74) Mandataire : **de Pena, Alain**
**COMPAGNIE IBM FRANCE Departement de Propriété Industrielle**
**F-06610 La Gaude (FR)**

**EP 0 003 943 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

# Procédé et dispositif pour déterminer la phase initiale de l'horloge dans un récepteur de données synchrone

## Domaine Technique

La présente invention concerne les systèmes de synchronisation de l'horloge dans un récepteur de données synchrone, et plus particulièrement un procédé et un dispositif pour déterminer la phase initiale de l'horloge avant la transmission des données.

## Etat de la Technique Antérieure

Dans les systèmes de transmission de données numériques synchrone, la séquence de bits à transmettre est tout d'abord convertie en une séquence de symboles. Ces symboles sont ensuite transmis un par un à des instants régulièrement espacés de T secondes appelés instants de signalisation et déterminés par l'horloge de l'émetteur, en utilisant la technique de modulation d'une onde porteuse qui consiste à faire correspondre à chaque symbole une valeur discrète de l'une ou plusieurs caractéristiques (amplitude, phase) de l'onde porteuse. L'onde porteuse, ou porteuse, ainsi modulée est transmise à travers le canal de transmission. La porteuse modulée n'est représentative des données qu'aux instants de signalisation, et il est essentiel pour une détection correcte des données que le récepteur dispose d'une horloge précise indiquant les instants de signalisation auxquels le signal reçu du canal de transmission doit être échantillonné. L'horloge du récepteur doit être continuellement ajustée, ou synchronisée, en fréquence et en phase pour optimiser les instants d'échantillonnage du signal reçu et compenser les écarts de fréquence et de phase entre les horloges de l'émetteur et du récepteur. La synchronisation de l'horloge du récepteur comprend en fait trois opérations distinctes : deux opérations de synchronisation dites initiales, et une opération de maintien de synchronisation. Les opérations de synchronisation initiales comprennent :

— une première opération de synchronisation qui se situe avant la première transmission des données, par exemple en début de journée, et pendant laquelle l'émetteur transmet un signal de synchronisation sur lequel l'horloge du récepteur se synchronise ; cette opération peut ne pas être rapide car elle n'a lieu qu'une fois par jour ;

— une seconde opération de synchronisation qui se situe avant la transmission de chaque message de données et pendant aquelle l'horloge du récepteur se synchronise sur un signal de synchronisation envoyé par l'émetteur ; cette opération doit être très rapide car on comprendra que pour obtenir un bon rendement de la transmission la durée de l'opération de synchronisation doit être bien inférieure à la durée de transmission du message de données.

L'opération de maintien de synchronisation est une opération qui se déroule pendant la transmission des données et au cours de laquelle l'horloge du récepteur est ajustée continuellement en fonction d'une information de chronologie dérivée en général du signal de données reçu.

L'invention concerne les opérations de synchronisation initiales de l'horloge du récepteur. L'invention est particulièrement bien adaptée à ladite seconde opération de synchronisation définie plus haut parce que l'exécution des étapes qu'elle comporte est très rapide, mais peut bien sûr être utilisée pour ladite première opération de synchronisation.

Dans un récepteur de données, les impulsions qui définissent les instants d'échantillonnage sont fournies par un générateur d'impulsions d'horloge dont la fréquence et la phase sont ajustées par une information de chronologie fournie par un dispositif de récupération de chronologie. On désigne généralement ce générateur par le terme horloge. On peut classer les dispositifs de récupération de chronologie en deux grandes classes.

Dans une première classe on peut grouper les dispositifs de récupération de chronologie dans lesquels une information de chronologie est obtenue par filtrage du signal reçu, ou d'un signal dérivé du signal reçu, afin d'en extraire la composante spectrale à une fréquence égale à la cadence de signalisation 1/T Hz, ou à un multiple de cette fréquence. On citera, par exemple, le dispositif décrit dans l'article « Statistical Properties of Timing Jitter in a PAM Timing Recovery Scheme » par L. E. Franks et J. P. Bubrouski, paru dans «IEEE Transactions on Communications », Vol. COM-22, N° 7, juillet 1974, pages 913-920. En bref, dans le dispositif de récupération de chronologie décrit dans cet article, le signal reçu du canal de transmission, qu'il s'agisse du signal de synchronisation pendant une opération de synchronisation initiale, ou du signal de données lui-même pendant la transmission des données, est élevé au carré et ensuite appliqué à l'entrée d'un filtre à bande étroite centrée sur une fréquence égale à la cadence de signalisation. Ce filtre fournit une onde sinusoïdale à une fréquence égale à la cadence de signalisation qui est utilisée comme onde de chronologie sur laquelle se synchronise le générateur d'impulsions d'horloge.

Les dispositifs de récupération de chronologie de cette première classe sont simples mais très sensibles au bruit. En outre les filtres à bande étroite réalisés en technique numérique ont un temps de réponse relativement long qui nuit à une opération de synchronisation initiale rapide. Par suite de la sensibilité au bruit de ces dispositifs et de leur relative lenteur pendant une opération de synchronisation initiale, on a limité leurs applications aux répéteurs et aux modems à faible vitesse.

Dans une seconde classe on peut grouper les dispositifs de récupération de chronologie dans lesquels le signal reçu est traité de façon à obtenir un signal de commande qui est utilisé pour ajuster la fréquence et la phase d'un oscillateur à verrouillage de phase qui fait fonction de générateur d'impulsions d'horloge. On citera, par exemple, le dispositif de récupération de chronologie décrit dans le brevet français N° 75 14020 déposé par la demanderesse le 25 avril 1975 et publié sous le N° 2 309 089. Le dispositif de récupération de chronologie décrit dans le brevet précité comprend un premier et un second filtres pour extraire respectivement du signal reçu un premier signal S1 de fréquence $f_1 = f_c - 1/2T$ et de phase $\phi_1$ et un second signal S2 de fréquence $f_2 = f_c + 1/2T$ et de phase $\phi_2$, où $f_c$ est la fréquence de la porteuse et 1/T est la cadence de signalisation, et des moyens pour combiner ces premier et second signaux et fournir un signal d'erreur représentatif de la différence de phase $\phi_2$-$\phi_1$ qui est utilisée pour ajuster la phase d'un oscillateur à verrouillage de phase. Pendant une opération de synchronisation initiale, on extrait les signaux S1 et S2 du signal de synchronisation reçu et on combine ces signaux pour obtenir la valeur de la différence de phase $\phi_2$-$\phi_1$ qui est utilisée comme valeur d'ajustement initial de la phase de l'oscillateur à verrouillage de phase. Le dispositif de récupération de chronologie décrit brièvement ci-dessus permet, pendant une opération de synchronisation initiale, d'obtenir assez rapidement la phase initiale de l'horloge du récepteur. Par exemple, dans le cas d'une transmission de données à 4 800 bits par seconde conforme à l'Avis V27 bis du CCITT la phase initiale de l'horloge est obtenue en seize périodes de signalisation lorsque le canal de transmission est du type non conditionné. Dans les systèmes de transmission de données en configuration multipoint, il est de première importance que l'opération de synchronisation initiale soit la plus rapide possible et c'est ainsi que l'on s'est efforcé dans la présente invention de trouver des moyens qui permettent d'obtenir une synchronisation initiale encore plus rapide.

## Exposé de l'Invention

L'objet principal de l'invention est donc de fournir un procédé et un dispositif pour déterminer la phase initiale de l'horloge d'un récepteur de données synchrone qui permettent une synchronisation initiale très rapide de l'horloge du récepteur avant la transmission des données.

Cet objet et d'autres sont atteints d'une manière générale par le procédé de l'invention qui permet dans un système de transmission de données synchrone dans lequel les données sont transmises en modulant une onde porteuse de fréquence $f_c$ à la cadence de signalisation 1/T, de déterminer la valeur de phase initiale dont il faut faire varier la phase de l'horloge du récepteur pendant une opération de synchronisation initiale durant laquelle un signal de synchronisation dont le spectre comprend deux raies distinctes aux fréquences $f_1 = f_c - 1/2T$ et $f_2 = f_c + 1/2T$ est transmis. Le procédé de l'invention comprend les étapes suivantes :

a) on échantillonne le signal de synchronisation reçu à la cadence $1/\tau$ qui est un multiple de la cadence de signalisation, ce qui fournit un signal $x(k\tau)$ où $k = 0, 1, \ldots,$

b) on élève le signal $x(k\tau)$ au carré, ce qui fournit un signal $s(k\tau)$,

c) on calcule le coefficient $C_o$ qui correspond à la fréquence 1/T de la transformée de Fourier discrète du signal $s(k\tau)$ à partir de N échantillons du signal $s(k\tau)$, le nombre étant déterminé à partir de la résolution $R = 1/N\tau$ désirée pour pallier les effets des composantes spectrales autres que celle à la fréquence 1/T du signal $s(k\tau)$, et

d) on calcule la phase du coefficient $C_o$ qui représente la valeur de phase initiale dont il faut faire varier la phase de l'horloge du récepteur.

Selon un autre aspect de l'invention, on remplace les étapes c) et d) ci-dessus par les étapes suivantes :

— on calcule les parties réelle et imaginaire du coefficient $C_o$ qui correspond à la fréquence 1/T de la transformée de Fourier discrète du signal $s(k\tau)$, à partir de N échantillons du signal $s(k\tau)$, le nombre N étant déterminé à partir de la résolution $R = 1/N\tau$ désirée pour pallier les effets des composantes spectrales autres que celle à la fréquence 1/T du signal $s(k\tau)$, et

— on calcule à partir des parties réelle et imaginaire du coefficient $C_o$ la phase de ce coefficient qui représente la valeur de phase initiale dont il faut faire varier la phase de l'horloge du récepteur.

L'invention propose également un dispositif pour mettre en œuvre le procédé décrit ci-dessus.

## Brève Description des Figures

D'autres objets, caractéristiques et avantages de la présente invention ressortiront mieux de l'exposé qui suit, fait en référence aux dessins annexés à ce texte, qui représentent un mode de réalisation préféré de celle-ci.

La figure 1 représente le bloc diagramme d'un récepteur de données synchrone incorporant l'invention.

La figure 2 représente le bloc diagramme du dispositif pour déterminer la phase initiale conforme à l'invention.

La figure 3 représente le spectre du signal de synchronisation reçu élevé au carré.

Mode de Réalisation de l'Invention

Pour situer l'invention dans son contexte, on a représenté sur la figure 1 le bloc diagramme simplifié d'un récepteur de données synchrone incorporant l'invention. A titre d'exemple ce bloc diagramme est celui du récepteur d'un système de transmission de données synchrone utilisant une modulation à double bande latérale-porteuses en quadrature (DSB-QC). Le terme modulation DSB-QC est utilisé ici au sens large de façon à inclure tous les systèmes dans lesquels le signal transmis peut être représenté par la superposition de deux porteuses en quadrature modulées en amplitude. Le terme modulation DSB-QC inclut ainsi la modulation par saut de phase (PSK), la modulation par saut de phase et d'amplitude (A. PSK), et la modulation d'amplitude en quadrature (QAM).

Le signal reçu du canal de transmission sur la ligne 1 est appliqué à l'entrée d'un circuit de contrôle automatique de gain (AGC) 2 qui normalise l'énergie du signal reçu. La sortie du circuit AGC 2 est appliquée à l'entrée d'un filtre passe bande 3 qui rejette le bruit hors bande. La sortie du filtre 3 est appliquée à l'entrée d'un dispositif d'échantillonnage 4 dans lequel le signal reçu est échantillonné à la cadence $1/\tau$ qui est un multiple m/T de la fréquence de signalisation 1/T. La cadence d'échantillonnage $1/\tau$ est choisie supérieure à la fréquence de signalisation 1/T de façon à ce que l'on ait un nombre d'échantillons suffisant pour obtenir une bonne définition du signal reçu. La valeur de l'amplitude des échantillons fournis par le dispositif 4 est convertie en numérique dans un convertisseur analogique-numérique (A/D) 5. Les échantillons numériques du signal reçu ainsi obtenus à la sortie du convertisseur A/D 5 sont appliqués par une ligne 6 à l'entrée d'un transformateur de Hilbert numérique 7. Un transformateur de Hilbert est un dispositif qui a deux sorties et qui fournit respectivement sur ses deux sorties les composantes en phase et en quadrature du signal appliqué à son entrée. On en trouvera un exemple de réalisation numérique dans l'article « Theory and Implementation of the Discrete Hilbert Transform », paru dans « Digital Signal Processing », L. R. Robiner et C. M. Rader, 1972 IEEE Press. Les deux sorties du transformateur de Hilbert 7 sont ré-échantillonnées à la cadence de signalisation par des moyens non représentés et appliquées aux deux entrées d'un égaliseur transversal complexe en bande passante 8. On trouvera un exemple de réalisation d'un tel égaliseur dans le brevet français N° 73 26404 déposé par la demanderesse le 12 juillet 1973 et publié sous le N° 2 237 379. L'égaliseur 8 a deux sorties reliées respectivement aux deux entrées d'un système de détection de données 9 qui fournit les données détectées sur sa ligne de sortie 10. On trouvera un exemple de réalisation d'un tel système de détection de données dans le brevet français N° 74 43560 déposé par la demanderesse le 27 décembre 1974 et publié sous le N° 2 296 322.

Les échantillons du signal reçu, fournis par le convertisseur A/D 5, sont en outre appliqués par une ligne 11 à l'entrée d'un dispositif de récupération de chronologie 12. Le dispositif 12 fournit sur sa ligne de sortie 13 un signal de commande qui est appliqué à l'entrée de commande d'un oscillateur à verrouillage de phase numérique (PLO) 14. L'oscillateur PLO 14 fournit des impulsions d'horloge à la cadence d'échantillonnage, qui commandent le dispositif d'échantillonnage 4 par une ligne 15 et les autres composants numériques du récepteur par des lignes non représentées. L'oscillateur PLO 14 est un dispositif connu qui fournit des impulsions à une cadence égale à la fréquence d'échantillonnage $1/\tau$ et avec une phase qui peut être commandée. Un oscillateur PLO numérique comprend en général un oscillateur à quartz qui fournit une onde sinusoïdale de fréquence élevée. Cette onde sinusoïdale est mise en forme carrée et appliquée à une chaîne de diviseurs qui fournit des impulsions à la fréquence désirée. On peut faire varier la phase de ces impulsions en faisant varier les rapports de division dans la chaîne de diviseurs en fonction du signal appliqué à l'entrée de commande de l'oscillateur PLO.

Le dispositif de récupération de chronologie 12 comprend le dispositif pour déterminer la phase initiale 16 de l'invention et un dispositif de maintien de synchronisation 17. Le dispositif 16 a son entrée reliée à la ligne d'entrée 11 du dispositif de récupération de chronologie 12 et sa sortie reliée par une ligne 18 à la position 1 d'un commutateur à deux positions 19. Le dispositif 17 a son entrée reliée à la ligne 11 et sa sortie reliée par une ligne 20 à la position 11 du commutateur 19. La sortie commune du commutateur 19 est reliée à la ligne de sortie 13 du dispositif de récupération de chronologie 12.

A la mise en route du récepteur, l'oscillateur PLO 14 fournit les impulsions d'horloge avec une phase arbitraire.

Pendant une opération de synchronisation initiale, le commutateur 19 est en position I et la phase des impulsions fournies par l'oscillateur PLO 14 est ajustée en fonction du signal fourni par le dispositif pour déterminer la phase initiale 16. En fonctionnement normal, c'est-à-dire pendant la transmission des données, le commutateur 19 est en position II et la phase des impulsions fournies par l'oscillateur PLO 14 est ajustée en fonction du signal fourni par le dispositif de maintien de synchronisation 17. Le dispositif de détermination 16 sera décrit en détail en référence à la figure 2. Il existe de nombreux dispositifs de maintien de synchronisation. On pourra utiliser, par exemple, comme dispositif de maintien de synchronisation 17 l'un des dispositifs décrits en référence aux figures 3, 6 et 7 du brevet français N° 75 14020 précité.

On décrira maintenant en se référant à la figure 2 le dispositif pour déterminer la phase initiale 16 de l'invention. Le signal reçu échantillonné fourni par le convertisseur A/D 5 est appliqué par la ligne 11 aux deux entrées d'un multiplicateur binaire 21. La sortie du multiplicateur 21 est reliée en parallèle à une entrée de deux multiplicateurs binaires 22 et 23. L'autre entrée des multiplicateurs 22 et 23 est reliée

respectivement à la sortie de deux registres à décalage à six étages 24 et 25. Chacun des registres à décalage 24 et 25 a sa sortie bouclée sur son entrée. Les contenus des registres à décalage 24 et 25 sont décalés simultanément et à la cadence d'échantillonnage $1/\tau$. Les sorties des multiplicateurs 22 et 23 sont reliées respectivement aux entrées de deux accumulateurs 26 et 27 dont les sorties sont reliées respectivement aux deux entrées d'un résolveur numérique 28. Un résolveur est un dispositif connu qui reçoit comme entrées les valeurs du cosinus et du sinus d'un angle et fournit à sa sortie la valeur de cet angle. On trouvera une description détaillée d'un résolveur numérique dans, par exemple, le brevet français N° 71 47850 déposé par la demanderesse le 21 décembre 1971 et publié sous le N° 2 164 544. La sortie du résolveur 28 est reliée à l'entrée de commande de l'oscillateur PLO 14 à travers la ligne 18, le commutateur 19 en position I et la ligne 13 (figure 1).

On décrira maintenant le fonctionnement du dispositif de la figure 2. Selon l'invention, pendant une opération de synchronisation initiale, on transmet un signal de synchronisation dont le spectre comprend deux aies distinctes aux fréquences

$$f_1 = f_c - 1/2T \qquad \text{et} \qquad f_2 = f_c + 1/2T$$

où $f_c$ est la fréquence de la porteuse et T est la période de signalisation.

On connaît de tels signaux de synchronisation. On citera par exemple le signal de synchronisation recommandé par le CCITT dans son Avis V27 bis et qui est constitué par la porteuse dont la phase fait l'objet d'inversions successives de 180° à la cadence de signalisation, et le signal de synchronisation recommandé par le CCITT dans son Avis V29 et qui est une séquence de symboles constitués par des alternances successives entre deux symboles.

Le signal reçu à l'entrée du récepteur peut se mettre sous la forme :

$$x(t) = A_1 \cos(2\pi f_1 t + \phi_1) + A_2 \cos(2\pi f_2 t + \phi_2) \qquad (1)$$

où

$A_1$ et $\phi_1$ représentent respectivement l'amplitude et la phase de la composante à la fréquence $f_1$ du signal reçu, et

$A_2$ et $\phi_2$ représentent respectivement l'amplitude et la phase de la composante à la fréquence $f_2$ du signal reçu.

D'après les enseignements du brevet français N° 75 14020 précité, la phase de l'horloge du récepteur est correcte lorsque la différence de phase $\phi_2$-$\phi_1$ est nulle. Selon l'invention, on utilise la différence de phase $\phi_2$-$\phi_1$ comme valeur de phase initiale dont il faut faire varier la phase de l'horloge pour obtenir une synchronisation rapide de l'horloge du récepteur.

Soit $s(k\tau)$ le signal reçu échantillonné et élevé au carré

$$s(k\tau) = x^2(k\tau) \qquad (2)$$

D'après la relation (1), le signal $s(k\tau)$ peut s'écrire :

$$\begin{aligned} s(k\tau) = {} & 1/2\,(A_1^2 + A_2^2) \qquad (3) \\ & + 1/2\,A_1^2 \cos[2\pi(2f_1)k\tau + 2\phi_1] \\ & + 1/2\,A_2^2 \cos[2\pi(2f_2)k\tau + 2\phi_2] \\ & + A_1A_2 \cos[2\pi(f_1 + f_2)k\tau + \phi_2 + \phi_1] \\ & + A_1A_2 \cos[2\pi(f_2 - f_1)k\tau + \phi_2 - \phi_1] \end{aligned}$$

D'après la relation (3), on peut voir que le signal $s(k\tau)$ est la superposition des composantes suivantes :

— une composante continue d'amplitude $1/2\,(A_1^2 + A_2^2)$,
— une composante à la fréquence $2f_1$ d'amplitude $1/2\,A_1^2$ et de phase $2\phi_1$,
— une composante à la fréquence $2f_2$ d'amplitude $1/2\,A_2^2$ et de phase $2\phi_2$,
— une composante à la fréquence $f_1 + f_2$ d'amplitude $A_1A_2$ et de phase $\phi_1 + \phi_2$, et
— une composante à la fréquence $f_2 - f_1 = 1/T$ d'amplitude $A_1A_2$ et de phase $\phi_2 - \phi_2$.

Le spectre du signal $s(k\tau)$ est donc un spectre de raies que l'on a représenté sur la figure 3 dans le cas où $f_1 = 1\,000$ Hz, $f_2 = 2\,600$ Hz, $f_c = 1\,800$ Hz, $1/T = 1\,600$ Hz et $1/\tau = 6/T$, cas qui correspond à une transmission de données à 4 800 bits par seconde conforme à l'Avis V27 bis du CCITT.

On notera que, après échantillonnage à $1/\tau = 9\,600$ Hz, le spectre devient périodique de période $1/\tau$. La composante à $2f_2$ (ici supérieure à 4 800 Hz) est transformée du fait de l'échantillonnage en une

composante à la fréquence $1/\tau - 2f_2 = 4\,400$ Hz.

La différence de phase $\phi_2 - \phi_1$ est la phase de la composante à 1/T du signal $s(k\tau)$, et l'invention se propose de déterminer le plus rapidement possible la phase de cette composante.

Selon l'invention, la phase de la composante à 1/T du signal $s(k\tau)$ est obtenue en calculant à partir d'un nombre N prédéterminé d'échantillons du signal $s(k\tau)$ le coefficient $C_o$ qui correspond à la fréquence 1/T de la transformée de Fourier discrète (DFT) de $s(k\tau)$, puis en calculant la phase de ce coefficient. Le fait de prendre N échantillons du signal $s(k\tau)$ pour le calcul de la DFT de $s(k\tau)$ signifie qu'on examine le signal $s(k\tau)$ pendant une fenêtre de temps de durée $N\tau$. En théorie cela signifie que la DFT de $s(k\tau)$ ne fournit pas le spectre du signal $s(k\tau)$ mais celui du signal $s(k\tau)$ modulé par un signal rectangulaire d'amplitude égale à l'unité et de durée $N\tau$. Le coefficient $C_o$ de la DFT de $s(k\tau)$ fournit la convolution du spectre du signal $s(k\tau)$ avec la transformée de Fourier centrée sur la fréquence 1/T Hz du signal rectangulaire. La transformée de Fourier de ce signal rectangulaire est une courbe de forme connue du type sin x/x que l'on a illustrée sur la figure 3 par la courbe $\Gamma$ qui correspond à un nombre N arbitraire d'échantillons. Pour que la phase du coefficient $C_o$ fournisse une mesure exacte de la phase de la composante à 1/T il faut que le produit du spectre de raies par la courbe $\Gamma$ donne uniquement la raie à 1/T. Or étant donné que le spectre de raies comprend des composantes aux fréquences 0, $2f_1$, $f_1 + f_2$ et $1/\tau - 2f_2$ et que la courbe $\Gamma$ ne passe pas par zéro à ces fréquences, le produit du spectre de raies par la courbe $\Gamma$ ne donnera pas uniquement la raie à 1/T mais aussi une partie des raies aux fréquences 0, $2f_1$, $1/\tau - 2f_2$ et $f_1 + f_2$. Dans le cas d'un nombre N arbitraire d'échantillons la phase du coefficient $C_o$ ne fournira donc pas une mesure exacte de la phase de la composante à 1/T. Conformément à l'invention on choisira un nombre N d'échantillons tel que la courbe $\Gamma$ passe par zéro au moins à la fréquence $2f_1$, qui affecte de façon plus significative le calcul du coefficient $C_o$ dans l'exemple illustré sur la figure 3 où la fréquence $2f_1$ ne diffère de la fréquence 1/T que de 400 Hz. La relation entre le nombre d'échantillons et les passages par zéro de la courbe $\Gamma$ est donnée par

$$R = 1/N\tau \qquad (4)$$

où R est la résolution exprimée en Hertz. La courbe $\Gamma$ passe par zéro tous les R Hz de part et d'autre de la fréquence 1/T. Sur la figure 3 on a représenté la courbe $\Gamma_o$ déterminée conformément à l'invention et qui correspond à une résolution R = 400 Hz et à un nombre d'échantillons N = 24. La courbe $\Gamma_o$ passe par zéro à la fréquence nulle et aux fréquences $2f_1$, $f_1 + f_2$ et $1/\tau - 2f_2$.

En se référant de nouveau à la figure 2, le signal reçu échantillonné $x(k\tau)$ est élevé au carré par le multiplicateur 21 qui fournit à sa sortie le signal $s(k\tau)$. Le signal $s(k\tau)$ est appliqué à un dispositif pour calculer le coefficient $C_o$ de la DFT de $s(k\tau)$, dispositif qui dans l'exemple de réalisation préféré illustré sur la figure 2 comprend les multiplicateurs 22 et 23, les registres à décalage 24 et 25, et les accumulateurs 26 et 27.

Le coefficient $C_o$ de la DFT de $s(k\tau)$ est donné par la relation connue

Co

$$C_o = \sum_{k=0}^{N-1} s(k\tau)\, e^{-j\,2\pi/T\,k\tau} \qquad (5)$$

Le coefficient $C_o$ est un nombre complexe et on peut décomposer la relation (5) de façon à obtenir la partie réelle de $C_o$, Re $C_o$ et la partie imaginaire de $C_o$, Im $C_o$ :

$$\mathrm{Re}\, C_o = \sum_{k=0}^{N-1} s(k\tau) \cos 2\pi/T\, k\tau \qquad (6)$$

$$\mathrm{Im}\, C_o = - \sum_{k=0}^{N-1} s(k\tau) \sin 2\pi/T\, k\tau \qquad (7)$$

Si on prend par exemple $\tau = T/6$ et N = 24, ce qui correspond à l'exemple illustré sur la figure 3, les relations (6) et (7) deviennent respectivement :

$$\mathrm{Re}\, C_o = \sum_{k=0}^{23} s(k\tau) \cos k\pi/3 \qquad (8)$$

$$\mathrm{Im}\, C_o = - \sum_{k=0}^{23} s(k\tau) \sin k\pi/3 \qquad (9)$$

Le dispositif illustré sur la figure 2 utilise les relations (8) et (9) pour calculer Re $C_o$ et Im $C_o$. Le signal

$s(k\tau)$ est appliqué en parallèle à l'entrée de deux trajets, un trajet désigné trajet réel qui comprend le multiplicateur 22, le registre à décalage 24 et l'accumulateur 26 et qui calcule Re $C_o$ conformément à la relation (8), et un trajet désigné trajet imaginaire qui comprend le multiplicateur 23, le registre à décalage 25 et l'accumulateur 27 et qui calcule Im $C_o$ conformément à la relation (9). Ces deux trajets ont une structure identique et l'homme de l'art comprendra qu'on pourra utiliser un seul trajet pour calculer successivement Re $C_o$ et Im $C_o$ avec des composants suffisamment rapides.

Le trajet réel calcule Re $C_o$ de la façon suivante. Le signal $s(k\tau)$ est appliqué à une entrée du multiplicateur 22 qui reçoit sur son autre entrée les valeurs de cos $k\,\pi/3$ pour $k = 0, 1, ..., 23$ stockées dans le registre à décalage 24. La fonction cos $k\pi/3$ pouvant prendre six valeurs distinctes quand k varie, le registre à décalage 24 comprend six étages pour stocker ces six valeurs. Le contenu du registre à décalage 24 est décalé à la cadence d'échantillonnage $1/\tau$. On obtient successivement à la sortie du multiplicateur 22 les produits :

$$s(k\tau) \cos k\pi/3 \text{ pour } k = 0, ..., 23.$$

Ces produits sont accumulés dans l'accumulateur 26 qui fournit après 24 périodes d'échantillonnage la partie réelle de $C_o$.

$$\text{Re } C_o = \sum_{k=0}^{23} s(\tau) \cos k\pi/3$$

Le trajet imaginaire permet de façon analogue de calculer Im $C_0$ conformément à la relation (9). On peut aisément vérifier que les valeurs de Re $C_o$ et Im $C_o$ définies respectivement par les relations (8) et (9) sont égales respectivement à

$$\text{Re } C_o = 12\, A_1A_2 \cos (\phi_2 - \phi_1)$$
$$\text{Im } C_o = 12\, A_1A_2 \sin (\phi_2 - \phi_1)$$

Les quantités Re $C_o$ et Im $C_o$ fournies respectivement après 24 périodes d'échantillonnage par les accumulateurs 26 et 27 sont appliquées aux entrées du résolveur 28 qui en dérive la valeur de la phase $\phi_2 - \phi_1$ de la composante à 1/T, qui est appliquée par la ligne 18, le commutateur 19 en position I, et la ligne 13 à l'entrée de commande de l'oscillateur PLO 14. La valeur de $\phi_2 - \phi_1$ est la valeur de phase initiale dont il faut faire varier la phase de l'oscillateur PLO 14.

Si on reprend l'exemple d'une transmission à 4 800 bps conforme à l'Avis V27 bis du CCITT avec une cadence de signalisation 1/T = 1 600 Hz et si on choisit $1/\tau = 6/T$, on notera qu'on obtient une mesure exacte de la valeur de phase initiale après 24 échantillons c'est-à-dire après quatre périodes de signalisation, soit après 2,5 ms seulement.

Bien que l'on ait décrit dans ce qui précède et représente sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Dans un système de transmission de données synchrone dans lequel les données sont transmises en modulant une onde porteuse de fréquence $f_c$ à une cadence de signalisation 1/T, un procédé pour déterminer la valeur de phase initiale dont il faut faire varier la phase de l'horloge du récepteur pendant une opération de synchronisation initiale durant laquelle un signal de synchronisation dont le spectre comprend deux raies distinctes aux fréquences $f_1 = f_c - 1/2T$ et $f_2 = f_c + 1/2T$ est transmis, caractérisé en ce qu'il comprend les étapes suivantes :

a) on échantillonne le signal de synchronisation reçu à la cadence $1/\tau$ qui est un multiple de la cadence de signalisation, ce qui fournit un signal $x(k\tau)$ où $k = 0, 1, ...,$

b) on élève le signal $x(k\tau)$ au carré, ce qui fournit un signal $s(k\tau)$,

c) on calcule le coefficient $C_o$ qui correspond à la fréquence 1/T de la transformée de Fourier discrète du signal $s(k\tau)$ à partir de N échantillons du signal $s(k\tau)$, le nombre N étant déterminé à partir de la résolution $R = 1/N\tau$ désirée pour pallier les effets des composantes spectrales autres que celle à la fréquence 1/T du signal $s(k\tau)$ et,

d) on calcule la phase du coefficient $C_o$ qui représente la valeur de phase initiale dont il faut faire varier la phase de l'horloge du récepteur.

2. Procédé selon la revendication 1, caractérisé en ce que les étapes c) et d) sont remplacées par les étapes suivantes :

on calcule les parties réelle et imaginaire du coefficient $C_o$ qui correspond à la fréquence 1/T de la

transformée de Fourier discrète du signal $s(k\tau)$, à partir de N échantillons du signal $s(k\tau)$, le nombre N étant déterminé à partir de la résolution $R = 1/N\tau$ désirée pour pallier les effets des composantes spectrales autres que celle à la fréquence 1/T du signal $s(k\tau)$, et

on calcule à partir des parties réelle et imaginaire du coefficient $C_o$ la phase de ce coefficient qui représente la valeur de phase initiale dont il faut faire varier la phase de l'horloge du récepteur.

3. Dans un système de transmission de données synchrone dans lequel les données sont transmises en modulant une onde porteuse de fréquence $f_c$ à une cadence de signalisation 1/T, un dispositif pour déterminer la valeur de phase initiale dont il faut faire varier la phase de l'horloge du récepteur pendant une opération de synchronisation initiale durant laquelle un signal de synchronisation dont le spectre comprend deux raies distinctes aux fréquences $f_1 = f_c - 1/2T$ et $f_2 = f_c + 1/2T$ est transmis, caractérisé en ce qu'il comprend :

un dispositif d'échantillonnage pour échantillonner le signal reçu à la cadence $1/\tau$ qui est un multiple de la cadence de signalisation, et fournir un signal $x(k\tau)$ où k = 0, 1, ....,

un premier multiplicateur pour élever le signal $x(k\tau)$ au carré et fournir un signal $s(k\tau)$,

un dispositif pour calculer le coefficient $C_o$ qui correspond à la fréquence 1/T, de la transformée de Fourier discrète du signal $s(k\tau)$ à partir de N échantillons du signal $s(k\tau)$, le nombre N étant déterminé à partir de la résolution $R = 1/N\tau$ désirée pour pallier les effets des composantes spectrales autres que celle à la fréquence 1/T du signal $s(k\tau)$ et,

un dispositif pour calculer la phase du coefficient $C_o$ qui représente la valeur de phase initiale dont il faut faire varier la phase de l'horloge du récepteur.

4. Dispositif selon la revendication 3, caractérisé en ce que le dispositif pour calculer le coefficient $C_o$ comprend :

des moyens pour calculer la partie réelle du coefficient $C_o$, et

des moyens pour calculer la partie imaginaire du coefficient $C_o$.

5. Dispositif selon la revendication 4, caractérisé en ce que les moyens pour calculer la partie réelle du coefficient $C_o$ comprennent :

des moyens de stockage dans lesquels sont emmagasinées les valeurs de $\cos 2\pi/T\ k\tau$ pour k = 0, 1, ...., (N-1),

un second multiplicateur pour calculer successivement les produits $s(k\tau) \cos 2\pi/T\ k\tau$ pour k= 0, 1, ...., (N-1), et

un accumulateur pour accumuler les produits $s(k\tau) \cos 2\pi/T\ k\tau$ pour k = 0, 1, ...., (N-1), cet accumulateur fournissant après N périodes d'échantillonnage la valeur de la partie réelle du coefficient $C_o$.

6. Dispositif selon la revendication 4 caractérisé en ce que les moyens pour calculer la partie imaginaire du coefficient $C_o$ comprennent :

des moyens de stockage dans lesquels sont emmagasinées les valeurs de $- \sin 2\pi/T\ k\tau$ pour k = 0, ...., (N-1),

un second multiplicateur pour calculer successivement les produits $- s(k\tau) \sin 2\pi/T\ k\tau$ pour k = 0, 1, ...., (N-1), et

un accumulateur pour accumuler les produits $- s(k\tau) \sin 2\pi/T\ k\tau$ pour k = 0, 1, ...., (N-1), cet accumulateur fournissant après N périodes d'échantillonnage la valeur de la partie imaginaire du coefficient $C_o$.

7. Dans un système de transmission de données synchrone dans lequel les données sont transmises en modulant une onde porteuse de fréquence $f_c$ à une cadence de signalisation 1/T, un dispositif pour déterminer la valeur de phase initiale dont il faut faire varier la phase de l'horloge du récepteur pendant une opération de synchronisation initiale durant laquelle un signal de synchronisation dont le spectre comprend deux raies distinctes aux fréquences $f_1 = f_c - 1/2T$ et $f_2 = f_c + 1/2T$ est transmis, caractérisé en ce qu'il comprend :

un dispositif d'échantillonnage pour échantillonner le signal reçu à la cadence $1/\tau$ qui est un multiple de la cadence de signalisation, et fournir un signal $x(k\tau)$,

un premier multiplicateur pour élever le signal $x(k\tau)$ au carré et fournir un signal $s(k\tau)$,

des premiers moyens de stockage dans lesquels sont emmagasinées les valeurs de $\cos 2\pi/T\ k\tau$ pour k = 0, 1, ...., (N-1), où le nombre N est déterminé à partir de la résolution $R = 1/N\tau$ désirée pour pallier les effets des composantes spectrales autres que celle à la fréquence 1/T du signal $s(k\tau)$,

un second multiplicateur pour calculer successivement les produits $s(k\tau) \cos 2\pi/T\ k\tau$ pour k = 0, 1, ...., (N-1), et

un premier accumulateur pour accumuler les produits $s(k\tau) \cos 2\pi/T\ k\tau$ pour k = 0, 1, ...., (N-1), cet accumulateur fournissant après N périodes d'échantillonnage la valeur de la partie réelle du coefficient $C_o$,

des seconds moyens de stockage dans lesquels sont emmagasinées les valeurs de $- \sin 2\pi/T\ k\tau$ pour k = 0, ...., (N-1),

un troisième multiplicateur pour calculer successivement les produits $- s(k\tau) \sin 2\pi/T\ k\tau$ pour k = 0, 1, ...., (N-1),

un second accumulateur pour accumuler les produits $- s(k\tau) \sin 2\pi/T\ k\tau$ pour k = 0, 1, ...., (N-1), cet accumulateur fournissant après N périodes d'échantillonnage la valeur de la partie imaginaire du coefficient $C_o$, et

un résolveur pour dériver la valeur de la phase du coefficient $C_0$ à partir des parties réelle et imaginaire du coefficient $C_0$, la valeur de la phase du coefficient $C_0$ représentant la valeur de phase initiale dont il faut faire varier la phase de l'horloge du récepteur.

**Claims**

1. In a synchronous data transmission system wherein data is transmitted by modulating a carrier wave of frequency $f_c$ at a signalling rate 1/T, a method for determining the initial phase value by which the receiver clock phase is to be varied during an initial synchronization operation during which a synchronization signal, the spectrum of which includes two distinct lines at frequencies $f_1 = f_c - 1/2T$ and $f_2 = f_c + 1/2T$, is transmitted, characterized in that it comprises the steps of :

a) sampling the synchronization signal received at the rate $1/\tau$ which is a multiple of the signalling rate, to provide a signal $x(k\tau)$ where k = 0, 1, ...,

b) multiplying the signal $x(k\tau)$ by itself, which provides a signal $s(k\tau)$,

c) computing the coefficient $C_0$ which corresponds to the frequency 1/T of the discrete Fourier transform of the signal $s(k\tau)$ from N samples thereof, the number N being determined from the resolution $R = 1/N\tau$ required to overcome the effect of the spectrum components other than that at frequency 1/T of signal $s(k\tau)$, and

d) computing the phase of coefficient $C_0$ representing the initial phase value by which the receiver clock phase is to be varied.

2. A method according to claim 1, characterized in that steps c) and d) are replaced by the steps of :

computing the real and imaginary parts of coefficient $C_0$ corresponding to frequency 1/T of the discrete Fourier transform of signal $s(k\tau)$ from N samples thereof, the number N being determined from the resolution $R = 1/N\tau$ required to overcome the effects of the spectrum components other than that at frequency 1/T of signal $s(k\tau)$, and

computing from the real and imaginary parts of coefficient $C_0$ the phase thereof representing the initial phase value by which the receiver clock phase is to be varied.

3. In a synchronous data transmission system wherein data is transmitted by modulating a carrier wave of frequency $f_c$ at a signalling rate 1/T, a device for determining the initial phase value by which the receiver clock phase is to be varied during an initial synchronization operation during which a synchronization signal the spectrum of which includes two distinct lines at frequencies $f_1 = f_c - 1/2T$ and $f_2 = f_c + 1/2T$ is transmitted, characterized in that it includes :

a sampling device for sampling the signal received at rate $1/\tau$ which is a multiple of the signalling rate, and for providing a signal $x(k\tau)$, where k = 0, 1, ...,

a first multiplier for multiplying signal $x(k\tau)$ by itself and providing a signal $s(k\tau)$,

a device for computing coefficient $C_0$ corresponding to frequency 1/T of the discrete Fourier transform of signal $s(k\tau)$ from N samples thereof, the number N being determined from the resolution $r = 1/N\tau$ required to overcome the effects of the spectrum components other than that of frequency 1/T of signal $s(k\tau)$, and

a device for computing the phase of coefficient $C_0$ representing the initial phase value by which the receiver clock phase is to be varied.

4. A device according to claim 3, characterized in that the device for calculating coefficient $C_0$ includes :

means for calculating the real part of coefficient $C_0$, and

means for calculating the imaginary part of coefficient $C_0$.

5. Device according to claim 4, characterized in that the means for computing the real part of coefficient $C_0$ includes :

storage means for storing the values of $\cos 2\pi/T\, k\tau$ where k = 0, 1, ..., (N-1),

a second multiplier for successively computing the products $s(k\tau) \cos 2\pi/T\, k\tau$ where k = 0, 1, ..., (N-1), and

an accumulator for accumulating the products $s(k\tau) \cos 2\pi/T\, k\tau$ for k = 0, 1, ..., (N-1), said accumulator providing the value of the real part of coefficient $C_0$ after N sampling periods.

6. A device according to claim 4, characterized in that the means for computing the imaginary part of coefficient $C_0$ includes :

storage means for storing the values of $-\sin 2\pi/T\, k\tau$ where k = 0, ..., (N-1),

a second multiplier for successively computing the products $-s(k\tau) \sin 2\pi/T\, k\tau$ where k = 0, 1, ..., (N-1), and

an accumulator for accumulating the products $-s(k\tau) \sin 2\pi/T\, k\tau$ where k = 0, 1, ..., (N-1), said accumulator providing the imaginary part of coefficient $C_0$ after N sampling periods.

7. In a synchronous data transmission system wherein data is transmitted by modulating a carrier wave of frequency $f_c$ at a signalling rate 1/T, a device for determining the initial phase value by which the receiver clock phase is to be varied during an initial synchronization operation during which a synchronization signal the spectrum of which includes two distinct lines at frequencies $f_1 = f_c - 1/2T$ and $f_2 = f_c + 1/2T$ is transmitted, characterized in that it includes :

a sampling device for sampling the received signal at a rate $1/\tau$ which is a multiple of the signalling rate and for providing a signal $x(k\tau)$,

a first multiplier for multiplying signal $x(k\tau)$ by itself thus providing a signal $s(k\tau)$,

first storage means for storing the values of $\cos 2\pi/T\ k\tau$ where $k = 0, 1, ..., (N-1)$, the number N being determined from the resolution $R = 1/N\tau$ required to overcome the effects of the spectrum components other than that of frequency $1/T$ of signal $s(k\tau)$,

a second multiplier for successively computing the products $s(k\tau) \cos 2\pi/T\ k\tau$ where $k = 0, 1, ..., (N-1)$, and

a first accumulator for accumulating the products $s(k\tau) \cos 2\pi/T\ k\tau$ where $k = 0, 1, ..., (N-1)$, said accumulator providing the value of the real part of coefficient $C_0$ after N sampling periods,

second storage means for storing the values of $-\sin 2\pi/T\ k\tau$ where $k = 0, 1, ..., (N-1)$,

a third multiplier for successively computing the products $-s(k\tau) \sin 2\pi/T\ k\tau$ where $k = 0, 1, ..., (N-1)$, a second accumulator for accumulating the products $-s(k\tau) \sin 2\pi/T\ k\tau$ where $k = 0, 1, ..., (N-1)$, this accumulator providing the imaginary part of coefficient $C_0$ after N sampling periods, and

a resolver for deriving the phase value of coefficient $C_0$ from the real and imaginary parts thereof, the phase value of coefficient $C_0$ representing the initial phase value by which the receiver clock phase is to be varied.

**Ansprüche**

1. In einem synchronen Datenübertragungssystem, welches die Daten durch Modulation einer Trägerschwingung der Frequenz $f_c$ bei einer Signalisationsfrequenz $1/T$ überträgt, ein Verfahren zum Bestimmen des Anfangsphasenwertes mit dem die Phase des Empfängertaktgebers während einer Anfangssynchronisationsoperation zu variieren ist, in der ein Synchronisationssignal übertragen wird, dessen Spektrum zwei diskrete Frequenzlinien bei den Frequenzen $f_1 = f_c - 1/2T$ und $f_2 = f_c + 1/2T$ enthält, dadurch gekennzeichnet, daß es folgende Verfahrensschritte einschließt :

a) Abtasten des Synchronisationssignals, das bei der Geschwindigkeit $1/\tau$, die ein Vielfaches der Signalisationsgeschwindigkeit ist, empfangen wird, und so ein Signal $x(k\tau)$ liefert, wobei $k = 0, 1, ...,$ ist,

b) Multiplizieren des Signals $x(k\tau)$ mit sich selbst, um ein Signal $s(k\tau)$ zu erhalten,

c) Errechnen des der Frequenz $1/T$ entsprechenden Koeffizienten $C_0$ der diskreten Fourier Transformation des Signals $s(k\tau)$ aus N abtastwerten davon, wobei die Anzahl N aus der Auflösung $R = 1/N\tau$ bestimmt wird, die zum Neutralisieren der Wirkung der Spektralkomponenten, mit Ausnahme der bei der Frequenz $1/T$ des Signals $s(K\tau)$, erforderlich ist, und

d) Errechnen der Phase des Koeffizienten $C_0$, die den Anfangsphasenwert darstellt, mit dem die Phase des Empfängertaktgebers zu variieren ist.

2. Verfahren nach Anspruch 1, dadurch gekennzeichnet, daß die Verfahrensschritte c) und d) durch folgende Verfahrensschritte ersetzt werden :

Errechnen des Real- und Imaginärteiles des der Frequenz $1/T$ entsprechenden Koeffizienten $C_0$ der diskreten Fourier Transformation des Signals $s(k\tau)$, aus N Abtastwerten davon, wobei die Anzahl N aus der Auflösung $R = 1/N\tau$ bestimmt wird, die zum Neutralisieren der Wirkung der Spektralkomponenten, mit Ausnahme der bei der Frequenz $1/T$ des Signals $s(k\tau)$, erforderlich ist, und

Errechnen aus dem Real- und Imaginärteil des Koeffizienten $C_0$ der Phase dieses Koeffizienten, die den Anfangsphasenwert darstellt, mit dem die Phase des Empfängertaktgebers zu variieren ist.

3. In einem synchronen Datenübertragungssystem, welches die Daten durch Modulation einer Trägerschwingung der Frequenz $f_c$ bei einer Signalisationsfrequenz $1/T$ überträgt, eine Vorrichtung zum Bestimmen des Anfangsphasenwertes mit dem die Phase des Empfängertaktgebers während einer Anfangssynchronisationsoperation zu variieren ist, in der ein Synchronisationssignal übertragen wird, dessen Spektrum zwei unterschiedliche Linien bei den Frequenzen $f_1 = f_c - 1/2T$ und $f_2 = f_c + 1/2T$ enthält, dadurch gekennzeichnet, daß die Vorrichtung folgendes einschließt :

eine Vorrichtung zur Abtastung des Signals, das bei der ein Vielfaches der Signalisationsfrequenz darstellenden Frequenz $1/\tau$ empfangen wird, und zur Erzeugung eines Signals $X(k\tau)$ mit $k = 0, 1, ...,$ einen ersten Multiplikator, um das Signal $x(k\tau)$ zum Quadrat zu erheben und ein Signal $s(k\tau)$ zu liefern,

eine Vorrichtung zum Errechnen des der Frequenz $1/T$ entsprechenden Koeffizienten $C_0$ der diskreten Fourier Transformation des Signals $s(k\tau)$, aus N Abtastwerten davon, wobei die Anzahl N aus der Auflösung $R = 1/N\tau$ bestimmt wird, die zum Neutralisieren der Wirkung der Spektralkomponenten, mit Ausnahme derer bei der Frequenz $1/T$ des Signals $s(k\tau)$, erforderlich ist, und

eine Vorrichtung zum Errechnen der Phase des Koeffizienten $C_0$, die den Anfangsphasenwert darstellt, mit dem die Phase des Empfängertaktgebers zu variieren ist.

4. Vorrichtung nach Anspruch 3, dadurch gekennzeichnet, daß die Vorrichtung zur Bestimmung des Koeffizienten $C_0$ einschließt :

Mittel zum Errechnen des Realteiles des Koeffizienten $C_0$, und

Mittel zum Errechnen des Imaginärteiles des Koeffizienten $C_0$.

5. Vorrichtung nach Anspruch 4, dadurch gekennzeichnet, daß die Mittel zum Errechnen des Realteiles des Koeffizienten $C_0$ einschließen :

Speichermittel zum Speichern der Werte cos $2\pi/T$ $k\tau$, mit k = 0, 1, ..., (N-1),

einen zweiten Multiplikator, um nacheinander die Produkte $s(k\tau)$ cos $2\pi/T$ $k\tau$ zu bestimmen, wo k = 0, 1, ..., (N-1), und

einen Akkumulator zum Summieren der Produkte $s(k\tau)$ cos $2\pi/T$ $k\tau$, mit k = 0, 1, ..., (N-1), wobei dieser Akkumulator nach N Abtastperioden den Wert des Realteiles des Koeffizienten $C_0$ liefert.

6. Vorrichtung nach Anspruch 4, dadurch gekennzeichnet, daß die Mittel zum Errechnen des Imaginärteiles des Koeffizienten $C_0$ einschließen :

Speichermittel zum Speichern der Werte – sin $2\pi/T$ $k\tau$, mit k = 0, 1, ..., (N-1),

einen zweiten Multiplikator, um nacheinander die Produkte – $s(k\tau)$ sin $2\pi/T$ $k\tau$ zu bestimmen, mit k = 0, 1, ..., (N-1), und

einen Akkumulator zum Summieren der Produkte – s(k) sin $2\pi/T$ $k\tau$, mit k = 0, 1, ..., (N-1), wobei dieser Akkumulator nach N Abtastperioden den Wert des Imaginärteiles des Koeffizienten $C_0$ liefert.

7. In einem synchronen Datenübertragungssystem, welches die Daten durch Modulation einer Trägerschwingung der Frequenz $f_c$ bei einer Signalisationsfrequenz 1/T überträgt, eine Vorrichtung zum Bestimmen des Anfangsphasenwertes, mit dem die Phase des Empfängertaktgebers während einer Anfangssynchronisationsoperation zu variieren ist, in der ein Synchronisationssignal übertragen wird, dessen Spektrum zwei unterschiedliche Linien bei den Frequenzen $f_1 = f_c - 1/2T$ und $f_2 = f_c + 1/2T$ enthält, dadurch gekennzeichnet, daß die Vorrichtung folgendes einschließt :

eine Abtastvorrichtung zum Abtasten des Signals, das bei der ein Vielfaches der Signalisationsfrequenz darstellenden Frequenz $1/\tau$ empfangen wird, und zum Erzeugen eines Signales $x(k\tau)$,

einen ersten Multiplikator, um das Signal $x(k\tau)$ zum Quadrat zu erheben und zin Signal $s(k\tau)$ zu erzeugen,

erste Speichermittel zum Speichern der Werte cos $2\pi/T$ $k\tau$, mit k = 0, 1, ..., (N-1), wobei die Anzahl N aus der Auflösung $R = 1/N\tau$ bestimmt wird, die zum Neutralisieren der Wirkung der Spektralkomponenten, mit Ausnahme derer bei der Frequenz 1/T des Signals $s(k\tau)$, erforderlich ist,

einen zweiten Multiplikator, um nacheinander die Produkte $s(k\tau)$, cos $2\pi/T$ $k\tau$ zu bestimmen, mit k = 0, 1, ..., (N-1), und

einen ersten Akkumulator zum Summieren der Produkte $s(k\tau)$ cos $2\pi/T$ $k\tau$, wo k = 0, 1, ..., (N-1), wobei dieser Akkumulator nach N Abtastperioden den Wert des Realteiles des Koeffizienten $C_0$ liefert,

zweite Speichermittel zum Speichern der Werte – sin $2\pi/T$ $k\tau$, mit k = 0, 1, ..., (N-1),

einen dritten Multiplikator, um nacheinander die Produkte – $s(k\tau)$ sin $2\pi/T$ $k\tau$ zu errechnen, mit k = 0, 1, ..., (N-1),

einen zweiten Akkumulator zum Summieren der Produkte – $s(k\tau)$ sin $2\pi/T$ $k\tau$, wo k = 0, 1, ..., (N-1), wobei dieser Akkumulator nach N Stichprobenperioden den Wert des Imaginärteils des Koeffizienten $C_0$, liefert, und

eine Auflösungseinrichtung zum Ableiten des Phasenwertes des Koeffizienten $C_0$ aus dem Real- und Imaginärteil des Koeffizienten $C_0$, wobei der Wert der Phase des Koeffizienten $C_0$ den Wert der Anfangsphase darstellt, mit der die Phase des Empfängertaktgebers zu variieren ist.

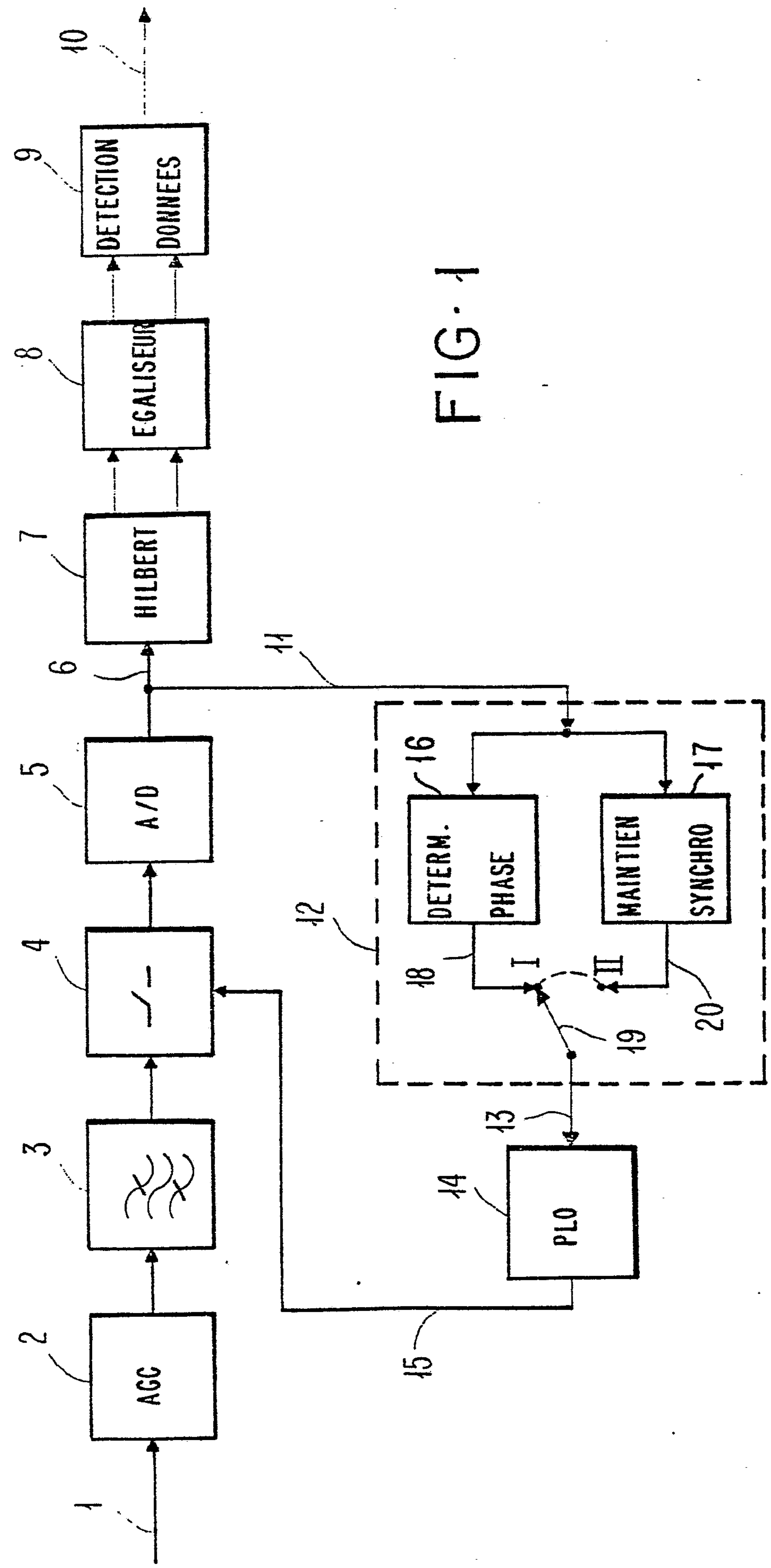
1
2
AGC
3
4
5
A/D
6
7
HILBERT
8
EGALISEUR
9
DETECTION
DONNEES
10
11
12
16
DETERM.
PHASE
17
MAINTIEN
SYNCHRO
18
I
II
19
20
13
14
PLO
15

FIG. 1

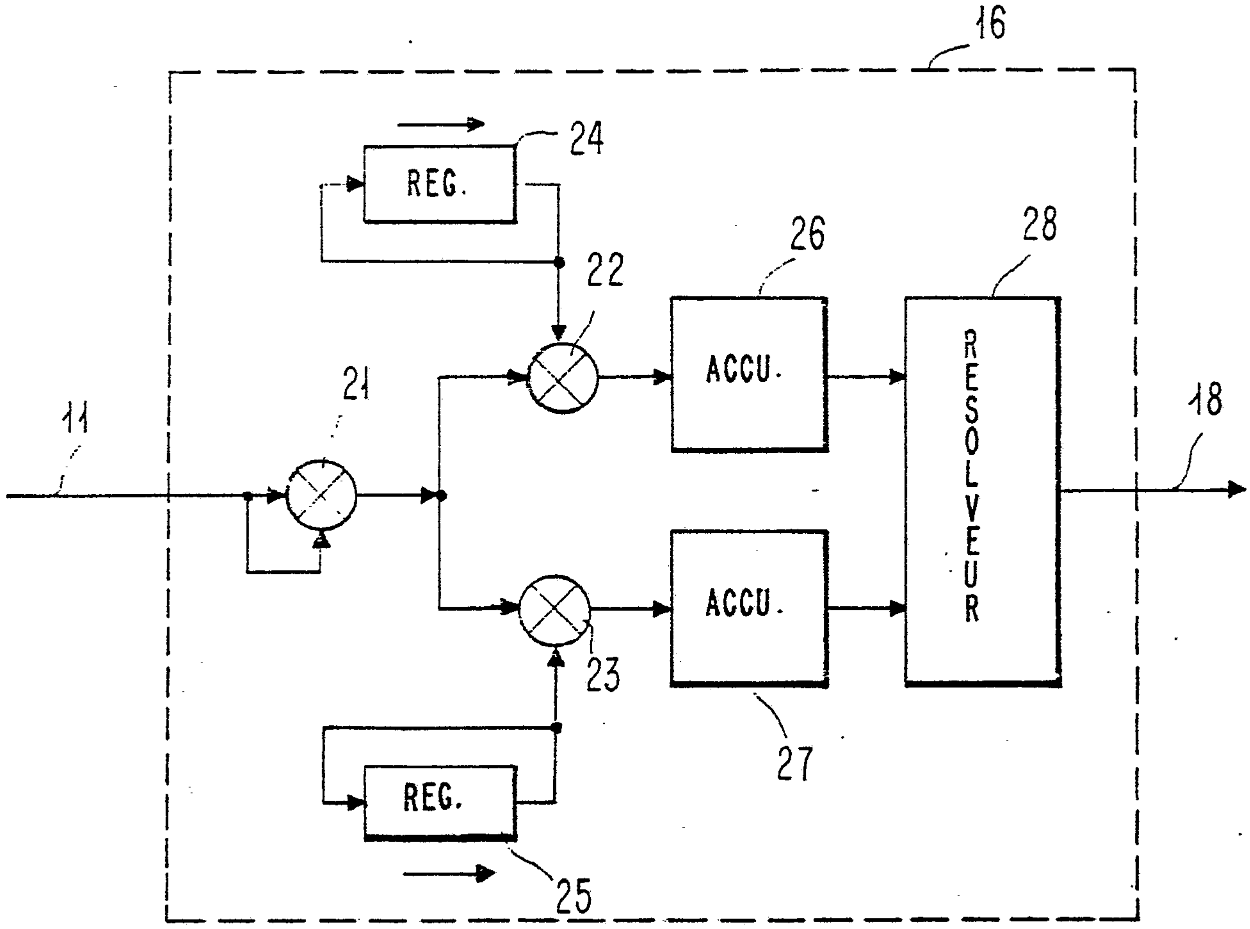
16
24
REG.
22
26
28
21
ACCU.
R
E
S
O
L
V
E
U
R
18
11
ACCU.
23
27
REG.
25

FIG·2

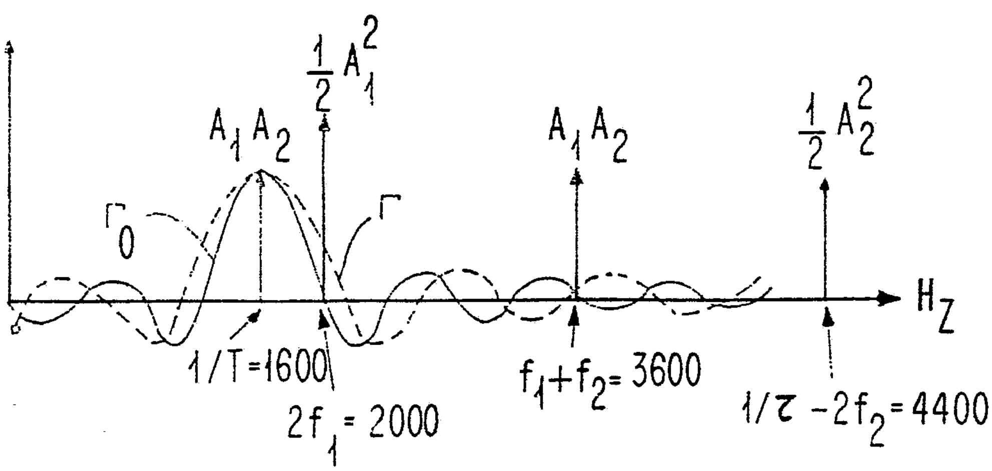
½ A₁²
A₁ A₂
A₁ A₂
½ A₂²
Γ₀
Γ
H_Z
1/T=1600
2f₁ = 2000
f₁+f₂= 3600
1/τ −2f₂=4400

FIG·3